# EUROPEAN PATENT SPECIFICATION

(11) **EP 1 693 241 B1**
(45) Date of publication and mention of the grant of the patent: **06.01.2010**
(21) Application number: 06250846.0
(22) Date of filing: 16.02.2006
(51) Int. Cl.: B60K 15/04

(54) **Fuel tank filler neck assembly**
Einfüllstutzen für ein Kraftstofftank
Conduite de remplissage pour réservoir de carburant

(30) Priority: 17.02.2005 US 653710 P
(43) Date of publication of application: 23.08.2006
(73) Proprietor: STANT MANUFACTURING INC., Connersville, IN 47331-1696 (US)
(72) Inventor: McClung, Chad A., Connersville, Indiana 47331 (US)
(74) Representative: Croston, David

(56) References cited:
- DE-C1- 4 405 409
- US-A1- 2002 108 669

## Description

### BACKGROUND

The present disclosure relates to fuel systems, and particularly to fuel tank filler necks. More particularly, the present disclosure relates to a component coupled to a fuel tank filler neck and retained in a fuel-conducting passageway formed in the filler neck. A known filler neck system is shown in DE4405409C1, disclosing the preamble of claim 1.

### SUMMARY

In accordance with the present disclosure, a component such as an inlet cup or inlet check valve is retained in a fixed position in a filler neck by bonding a low-permeation layer of the component to a low-permeation layer of the filler neck. The layers are made of the same or similar materials.

Features of the present disclosure will become apparent to those skilled in the art upon consideration of the following detailed description of illustrative embodiments exemplifying the best mode of carrying out the disclosure as presently perceived.

### BRIEF DESCRIPTION OF THE DRAWINGS

The detailed description particularly refers to the accompanying drawings in which:

Fig. 1 is a perspective view of a fuel tank coupled to a tank filler neck including an inlet cup and closure cap at an outer end of the filler neck and an inlet check valve at an inner end of the filler neck in accordance with the present disclosure;

Fig. 2 is an enlarged diagrammatic view of the filler neck of Fig. 1 showing that (1) a low-permeation layer in the inlet check valve is bonded to a low permeation layer in the filler neck to retain the inlet check valve in a fixed position in the filler neck and (2) a low-permeation layer in the inlet cup is bonded to a low-permeation layer in the filler neck to retain the inlet cup in a fixed position in the filler neck;

Fig. 3 is a perspective assembly view, with portions broken away, showing various layers included in the filler neck and various layers included in the inlet cup before the inlet cup is bonded to the filler neck;

Fig. 4 is an enlarged sectional view showing mating and bonding of the inlet cup low-permeation layer and the filler neck low-permeation layer before a closure cap is coupled to the filler neck to close an open mouth of the filler neck; and

Fig. 5 is a view similar to Fig. 4 showing a closure cap coupled to the filler neck to define a closed chamber in the filler neck and showing that a "leak path" (LP), which leak path may be established between dissimilar materials comprising the inlet cup, both originates and terminates in the closed chamber to block discharge of liquid fuel and fuel vapor leakage to the surroundings outside the filler neck while the closure cap is mounted on the filler neck.

### DETAILED DESCRIPTION OF THE DRAWINGS

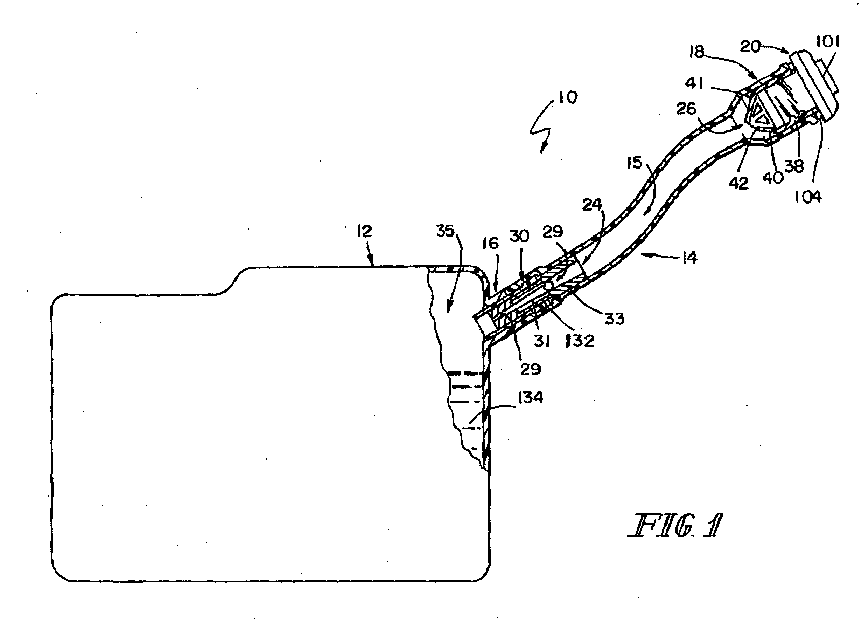

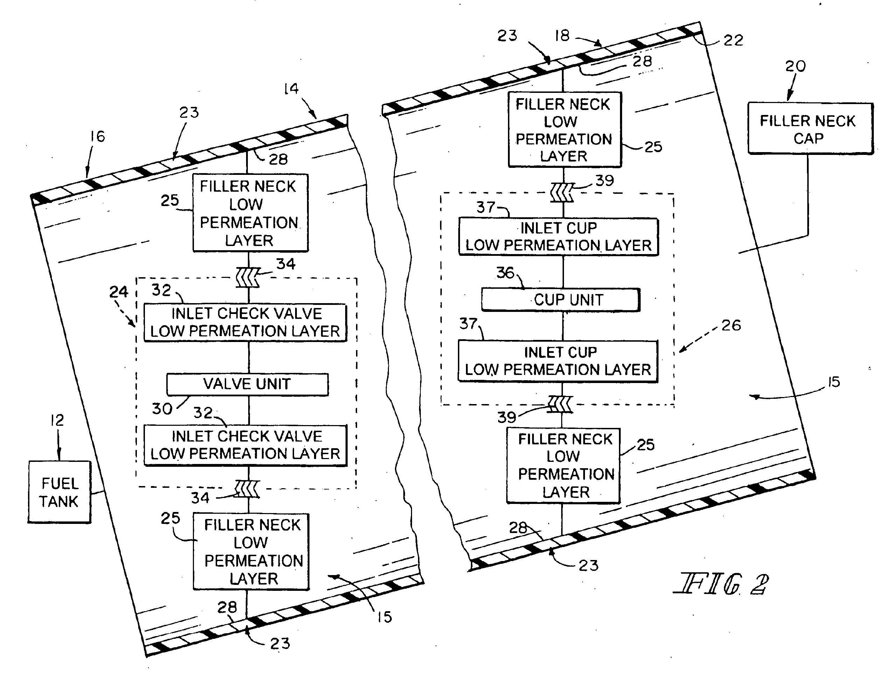

A vehicle fuel system 10 comprises a fuel tank 12, a filler neck 14 having a lower end 16 coupled to fuel tank 12 and an upper end 18, and a removable closure cap 20 coupled to upper end 18 of filler neck 14 to close an open mouth 22 formed in the upper end of filler neck 14 as shown, for example, in Fig. 1. Vehicle fuel system 10 also comprises filler neck components such as an inlet check valve 24 and an inlet cup 26 coupled to filler neck 14 as shown diagrammatically in Fig. 2.

Inlet check valve 24 is configured to lie in a fuel-conducting passageway 15 formed in filler neck 14 and regulate flow of liquid fuel and fuel vapor therethrough. In the illustrated embodiment, a fuel-conducting conduit 29 formed in inlet check valve 24 includes a "one-way" valve member 31 that is slidable in a fuel-conducting conduit 29 formed in a valve base 33 between conduit-closing position shown in Fig. 1 and a conduit-opening position (not shown). During refueling, liquid fuel discharged into an "open" filler neck 14 by a fuel-dispensing pump nozzle (not shown) contacts and moves one-way valve member 31 inwardly against a yieldable biasing spring 132 located in valve base 33 to assume the opened position so that liquid fuel can flow past the one-way valve member 31 and through fuel-conducting conduit 29 into a fuel reservoir 134 provided in an interior region 35 of fuel tank 12. Reference is made to U.S. Patent No. 5,568,828 and Application No, 10/810,982, filed March 26, 2004, for disclosures relating to vehicle fuel systems and inlet check valves, which patent and application are hereby incorporated by reference herein.

Inlet cup 26 includes a mount 38 and a nozzle restrictor 40 coupled to mount 38 and formed to include an aperture 42 as shown, for example, in Figs. 1 and 3-5. Mount 38 is coupled to outer end 18 of filler neck 14 and sized to receive an inner portion of closure cap 20 therein as suggested in Figs, 1 and 5, Aperture 42 is sized to receive a fuel-dispensing portion of a pump nozzle (not shown) therein during tank refueling.

As suggested in Fig. 2, filler neck 14 comprises a side wall 23 and a filler neck low-permeation layer 25 coupled to an interior surface 28 of side wall 23. It is within the scope of the present disclosure to mate a low-permeation layer provided on an exterior portion of a filler neck component (e.g., inlet check valve 24 or inlet cup 26) with a low-permeation layer 25 provided on an interior surface 28 of filler neck 14.

As suggested diagrammatically in Fig. 2, inlet check valve 24 includes a valve unit 30 and an inlet check valve (component) low-permeation layer 32 coupled to filler neck low-permeation layer 25 at bond joint 34 to retain valve unit 30 in a fixed position in fuel-conducting passageway 15 of lower end 16 of filler neck 14. A "low-emission" union of filler neck 14 and inlet check valve 24 is established at bond joint 34 since low-permeation layers 25 and 32, in an illustrative embodiment, are made of substantially the same material and bonded to one another.

In an illustrative embodiment shown in Fig. 1, inlet check valve 24 is coupled to filler neck 14 by bonding inlet check valve low-permeation layer 32 on valve base 33 of valve unit 30 to filler neck low-permeation layer 25 on filler neck 14. Valve unit 30 comprises one-way valve member 31, spring 132, and valve base 33.

As suggested diagrammatically in Fig. 2, inlet cup 26 includes a cup unit 36 and an inlet cup (component) low-permeation layer 37 coupled to filler neck low-permeation layer 25 at bond joint 39 to retain cup unit 36 in a fixed position in fuel-conducting passageway 15 of upper end 18 of filler neck 14. A low-emission union of filler neck 14 and inlet cup 26 is established at bond joint 39 since low-permeation layers 25 and 37, in an illustrative embodiment, are made of the same material and bonded to one another.

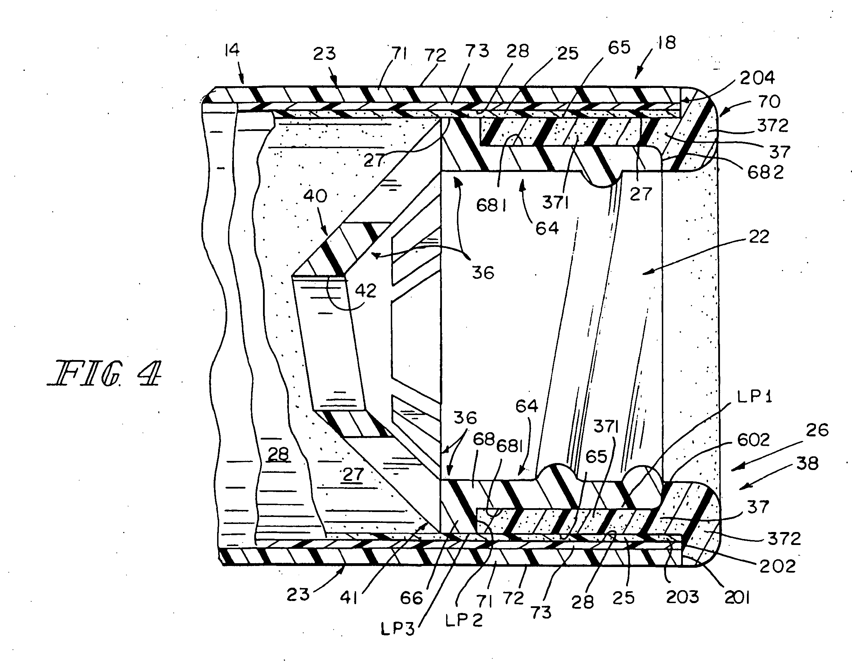

In an illustrative embodiment shown in Figs, 3-5, inlet cup 26 is coupled to filler neck 14 by bonding inlet cup low-permeation layer 37 on cup unit 36 to filler neck low-permeation layer 25 on filler neck 14. Cup unit 36 comprises nozzle restrictor 40, threaded restrictor anchor 64, and inlet cup low-permeation layer 37, as shown best in Fig. 4. Nozzle restrictor 40 and threaded restrictor anchor 64 cooperate to define a base 41 to which inlet cup low-permeation layer 25 is coupled.

In an illustrative embodiment, each of low-permeation layers 25, 32, and 37 is made of polyarylamide i(PA$. It is within the scope of this disclosure to use other suitable materials to form layers 25, 32, and 37 such as, for example, semiaromatic polyamide (PPA), polyphenylene sulfide alloy (PPS), and poiybutylene terephthalate (PBT).

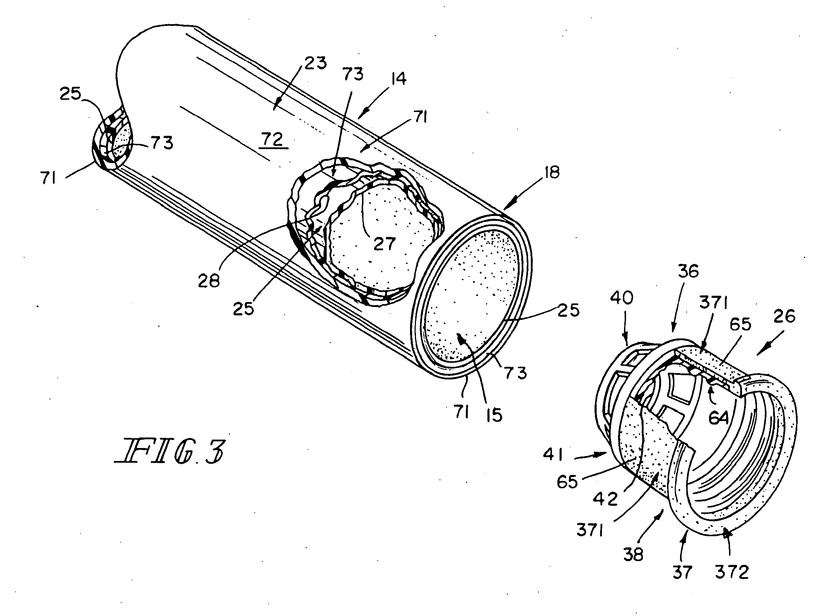

As suggested in Figs. 3 and 4, filler neck 14 comprises a side wall 23 including an outer sleeve 71 providing an exterior surface 72 and an inner sleeve 73 providing interior surface 28. Outer sleeve 71 surrounds inner sleeve 73 and cooperates with inner sleeve 73 to define side wall 23. Filler neck low-permeation layer 25 of inlet cup 26 is appended to interior surface 28 of inner sleeve 73 as shown best in Fig. 4. Each of outer and inner sleeves 71, 73 is made of a suitable plastics material in the illustrated embodiment. Thus, filler neck 14 is a multi-layer tubular member.

As suggested in Figs. 3 and 4, mount 38 of inlet cup 26 includes threaded restrictor anchor 64 and inlet cup low-permeation layer 3 7. Restrictor anchor 64 includes a restrictor support ring 66 and a cap-mount sleeve 68.

Restrictor support ring 66 is coupled to nozzle restrictor 40 and to an interior surface 27 of filler neck low-permeation layer 25. Nozzle restrictor 40 is formed to include aperture means 42 for receiving a small-diameter unleaded fuel-dispensing pump nozzle therein so that unleaded fuel can be dispensed into fuel-conducting passageway 15.

Cap-mount sleeve 68 is coupled to restrictor support ring 66 and arranged to lie inside an interior region 15 defined by filler neck low-permeation layer 25 to define an annular space therebetween. Inlet cup low-permeation layer 37 includes a cylindrical inner section 371 located in that annular space and a cylindrical outer section 372 located outside that annular space and formed to define an annular rim 70 as suggested in Fig. 4. Bond joint 39 is established between interior surface 27 of filler neck low-permeation layer 25 and an exterior surface 65 of cylindrical inner section 371 of inlet cup low-permeation layer 37.

By bonding low-permeation layer 37 of inlet cup 26 to low-permeation layer 25 of filler neck 14 without using mechanical locks or clamps or additional sealing members, those layers 25, 37 are unified to produce a monolithic element providing a liquid-and-vapor barrier to block leakage of liquid fuel and fuel vapor (or other hydrocarbon emissions) along a path between layers 25, 37. It is thus unnecessary to deploy any O-ring seal or gasket between layers 25, 37 to minimize discharge of emissions from the filler neck to the surroundings along or across a joint or space between a filler neck and an inlet cup mounted in the filler neck. In the present disclosure, the barrier or low-permeation layers 25, 37 of filler neck 3 4 and inlet cup 26 are made of the same (or similar) material and are bonded to one another to form a low-emission union therebetween. In illustrative embodiments, such a bonded joint can be achieved through a welding operation (e.g., hot plate, sonic, spin, vibration, or laser) or by overmolding (e.g., blow molding).

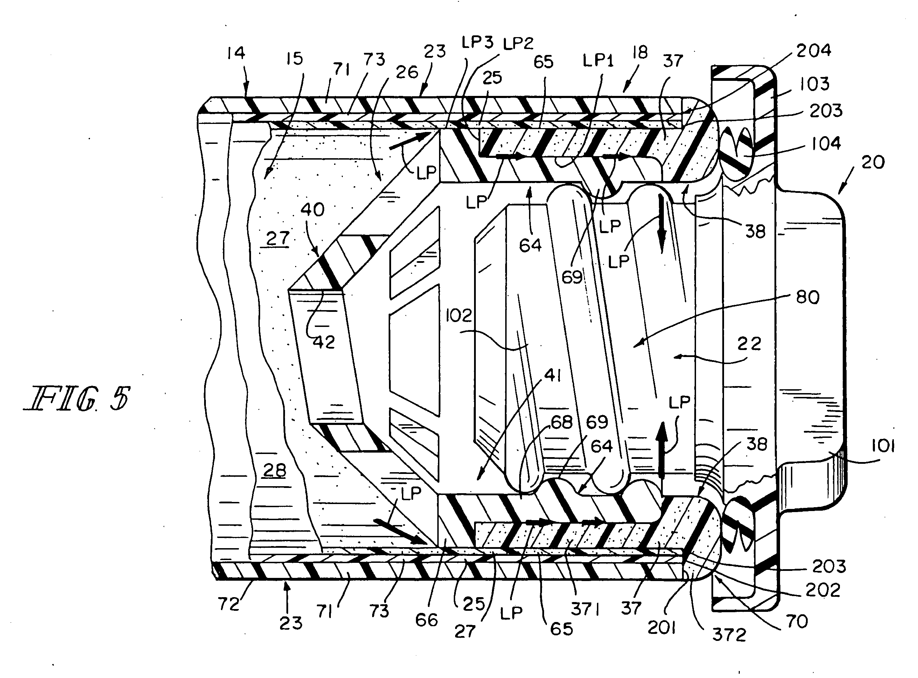

As suggested in Fig. 5, once closure cap 20 is mounted on the filler neck, any liquid fuel and fuel vapor that might happen to flow along a leak path (LP) between restrictor anchor 64 and low-permeation layer 37 does not escape to the surroundings and is discharged back into a closed chamber 80 provided in fuel-conducting passageway 15. Closure cap 20 includes a handgrip 101, a threaded portion 102 configured to mate with and engage threads 69 formed on cap-mount sleeve 68, an annular flange 103, and an annular seal 104 coupled to annular flange 103 and arranged to be compressed between rim 70 on filler neck 14 and annular flange 103 on closure cap 20 to establish a sealed interface between filler neck 14 and closure cap 20.

A filler neck 14 comprises a side wall 23 and a filler neck low-permeation layer 25 coupled to an interior surface 28 of side wall 23 and configured to define a boundary of a fuel-conducting passageway 15 extending through filler neck 14 as suggested in Fig. 2. A filler neck component (e.g., inlet check valve 24 or inlet cup 26) comprises a base 33 arranged to lie in fuel-conducting passageway 15 and a component low-permeation layer 32 or 37 coupled to an exterior surface of the base 33. filler neck low-permeation layer 25 is made of a first material and component low-permeation layer 32, 37 is also made of the first material. Component low-permeation layer 32, 37 is bonded to filler neck low-permeation layer 25 at a bond joint 34, 39 to retain the filler neck component 24, 26 in a fixed position in fuel-conducting passageway 15 to establish a low-emission union of component and filler neck low-permeation layers 25, 32, 37 to provide means for blocking permeation of liquid fuel and fuel vapor extant in fuel-conducting passageway 15 to atmosphere surrounding side wall 23 through component and filler neck low-permeation layers 25,32,37.

In an embodiment shown diagrammatically in Fig. 2 and illustratively in Fig. 1, the filler neck component comprises a base 33 formed to include fuel-conducting conduit 29, a biasing spring 132, and a one-way valve member 31 that cooperate with base 33 to define a fuel tank inlet check valve 24 located in a lower end 16 of filler neck 14 to lie in close proximity to a fuel tank 12 associated with filler neck 14. One-way valve member 31 is mounted for sliding movement in a fuel-conducting conduit 29 formed in base 33 and urged to a conduit-closing position by biasing spring 132. Spring 132 is configured to yield to allow movement of one-way valve member 31 relative to base 33 to assume a conduit-opening passageway 15 defined by filler neck low-permeation layer 25 into and through fuel-conducting conduit 29 formed in base 33 in response to a force applied to one-way valve member 31 by the incoming liquid fuel flowing toward fuel tank 12 associated with filler neck 14.

In another embodiment shown diagrammatically in Figs. 2 and illustratively in Figs. 1 and 3-5, filler neck component comprises a base 41, a closure cap 20 configured to male with base 41 to close an opening into fuel-conducting passageway 15 defined by filler neck low-permeation layer 25. Closure cap 20 includes an annular seal 104 arranged to mate with a portion of component low-emission layer 37 coupled to an exterior surface of base 41 and a cap body 102, 103 configured to carry annular seal 104 and engage base 41 to establish a sealed connection between cap body 102, 103, annular seal 104, and component low-emission layer 37 to block discharge of liquid fuel and fuel vapor from fuel-conducting passageway 15 through a space between closure cap 20 and component low-emission layer 25. Base 41 cooperates with filler neck low-emission layer 25 to define a leak-path conduit (LP) therebetween that originates and terminates in fuel-conducting passageway 15 (as suggested in Fig. 5) so that any liquid fuel and fuel vapor that flows in the leak-path conduit (LP) is emptied into fuel-conducting passageway 15 and is unable to escape to the atmosphere surrounding filler neck 14.

Base 41 includes a nozzle restrictor40 formed to include a nozzle-receiving aperture 42 sized and adapted to receive a small-diameter unleaded fuel-dispensing pump nozzle and a restrictor anchor 64 coupled to nozzle restrictor 40 to locate nozzle-receiving aperture 42 in fuel-conducting passageway 15. Component low-permeation layer 37 is coupled to an exterior surface of restrictor anchor 64 to cause a first portion (LP1) of the leak-path conduit (LP) to lie therebetween as suggested in Figs. 4 and 5.

Restrictor anchor 64 includes a cap-mount sleeve 68 including an interior surface configured to receive and mate with cap body 102, 103 of closure cap 20 and an exterior surface coupled to component low-permeation layer 37 to define first portion (LP1) of leak-path conduit (LP) therebetween. Restrictor anchor 64 further includes a restrictor support ring 66 interposed between and coupled to each of nozzle restrictor 40 and cap-mount sleeve 68. Restrictor support ring 66 includes a first exterior surface coupled to filler neck low-permeation layer 25 to define a second portion (LP2) of leak-path conduit (LP) therebetween and a second exterior surface coupled to component low-permeation layer 25 to define a third portion (LP3) of leak-path conduit (LP) therebetween. Second portion (LP2) interconnects the first and third portions (LP1, LP3) in fluid communication. Each of first and third portions (LP 1, LP3) are arranged to lie in fluid communication with fuel-conducting passageway 15 to cause leak-path conduit (LP) to originate and terminate in fuel-conducting passageway 15 as suggested in Figs. 4 and 5.

As suggested in Figs. 4 and 5, each of side wall 23 of filler neck 14 and filler neck low-permeation layer 25 terminate, respectively, at axially outer ends 201, 202, 203 thereof and cooperate to define an annular outer end face 204 of filler neck 14. Component low-permeation layer 37 includes an annular inner section 371 positioned to lie between portions of base 41 and filler neck low-permeation layer 25 and bonded to filler neck low-permeation layer 25 at bond joint 39. Component low-permeation layer 25 further includes an annular outer section 372 appended to annular inner section 371 and mated to annular outer end face 204 of filler neck 14. Annular outer section 372 of component low-permeation layer 25 is bonded to axially outer end 203 of filler neck low-permeation layer 25 at bond joint 39.

Base 41 includes an exterior annular side surface 681 coupled to annular inner section 371 of component low-permeation layer 37 to cause one leg of first portion (LP1) of leak-path conduit (LP) to lie therebetween as shown in Figs. 4 and 5. Base 41 further includes an exterior annular end surface 682 coupled to annular outer section 372 of component low-permeation layer 37 to cause a second leg of first portion (LPI) of leak-path conduit (LP) to lie therebetween. The second leg is arranged to lie in fluid communication with fuel-conducting passageway 15 as shown in Figs. 4 and 5.

Restrictor anchor 64 is coupled to nozzle restrictor 40 and configured to include the exterior annular side and end surfaces 681, 682. Restrictor anchor 64 is also coupled to filler neck low-permeation layer 25 to cause second portion (LP2) of leak-path conduit (LP) to lie therebetween as shown in Figs. 4 and 5.

## Claims

1. A fuel tank filler neck apparatus comprising
a filler neck (14) having an internal low-permeation layer (25) defining a fuel-conducting passageway (15) **characterised by**
a filler neck component (24, 26) having an external low-permeation layer (32, 37) bonded to the internal low-permeation layer (25) of the filler neck to establish a low-emission union (34, 39) therebetween, wherein each of the internal and external low-permeation layers (25, 32, 37) are made of a first material.

2. The apparatus of claim 1 in which
the filler neck further comprises a side wall (23) and the filler neck low-permeation layer (25) is coupled to an interior surface (28) of the side wall (23) and is configured to define a boundary of the fuel-conducting passageway (15) extending through the filler neck (14), and
the filler neck component comprises a base (33, 41) arranged to lie in the fuel-conducting passageway (15) and the external low-permeation layer (32, 37) is coupled to an exterior surface (65) of the base, wherein the internal low-permeation layer and the external low-permeation layer are bonded at a bond joint (34, 39) to retain the filler neck component (24, 26) in a fixed position in the fuel-conducting passageway (15) to provide means for blocking permeation of liquid fuel and fuel vapor extant in the fuel-conducting passageway (15) to atmosphere surrounding the side wall (23) through the internal and external low-permeation layers (25, 32, 37).

3. The apparatus of claim 2, wherein the filler neck component further comprises a biasing spring (132) and a one-way valve member (31) that cooperate with the base (33) to define a fuel tank inlet check valve located in a lower end (16) of the filler neck (14) to lie in close proximity to a fuel tank (12) associated with the filler neck (14), the one-way valve member (31) is mounted for sliding movement in a fuel-conducting conduit (29) formed in the base (33) and urged to a conduit-closing position by the biasing spring (132), and the spring (132) is configured to yield to allow movement of the one-way valve member (31) relative to the base (33) to assume a conduit-opening position allowing flow of incoming liquid fuel to pass from the fuel-conducting passageway (15) defined by the internal low-permeation layer (25) into and through the fuel-conducting conduit (29) formed in the base (33) in response to a force applied to the one-way valve member (31) by the incoming liquid fuel flowing toward the fuel tank (12) associated with the filler neck (14).

4. The apparatus of claim 2, wherein the filler neck component further comprises a closure cap (20) configured to mate with the base to close an opening into the fuel-conducting passageway defined by the internal low-permeation layer wherein the closure cap includes an annular seal (104) arranged to mate with a portion of the external low-permeation layer coupled to the exterior surface of the base and a cap body (102, 103) configured to carry the annular seal and engage the base to establish a sealed connection between the cap body, annular seal, and the external low-permeation layer to block discharge of liquid fuel and fuel vapor from the fuel-conducting passageway through a space between the closure cap and the external low-permeation layer, and wherein the base cooperates with the internal low-permeation layer to define a leak-path conduit (LP) therebetween that originates and terminates in the fuel-conducting passageway so that any liquid fuel and fuel vapor that flows in the leak-path conduit is emptied into the fuel-conducting passageway and is unable to escape to the atmosphere surrounding the filler neck.

5. The apparatus of claim 4, wherein the base includes a nozzle restrictor (40) formed to include a nozzle-receiving aperture (42) sized and adapted to receive a small-diameter unleaded fuel-dispensing pump nozzle and a restrictor anchor (64) coupled to the nozzle restrictor to locate the nozzle-receiving aperture in the fuel-conducting passageway and wherein the external low-permeation layer is coupled to an exterior surface of the restrictor anchor to cause a first portion of the leak-path conduit (LP1) to lie therebetween.

6. The apparatus of claim 5. wherein the restrictor anchor includes a cap-mount sleeve (68) including an interior surface configured to receive and mate with the cap body of the closure cap and an exterior surface coupled to the external low-permeation layer to define the first portion (LP1) of the leak-path conduit therebetween, the restrictor anchor further includes a restrictor support ring (66) interposed between and coupled to each of the nozzle restrictor and the cap-mount body, the restrictor support ring includes a first exterior surface coupled to the internal low-permeation layer to define a second portion (LP2) of the leak-path conduit therebetween and a second exterior surface coupled to the external low-permeation layer to define a third portion (LP3) of the leak-path conduit therebetween, the second portion interconnects the first and third portions in fluid communication, and each of the first and third portions are arranged to lie in fluid communication with the fuel-conducting passageway to cause the leak-path conduit to originate and terminate in the fuel-conducting passageway.

7. The apparatus of claim 4, wherein each of the side wall of the filler neck and the filler neck internal low-permeation layer terminate at axially outer ends (201, 202, 203) thereof and cooperate to define an annular outer end face of the filler neck, the component low-permeation layer includes an annular inner section (371) positioned to lie between portions of the base and the filler neck internal low-permeation layer and bonded to the internal low-permeation layer at the bond joint (34), and the external low-permeation layer further includes an annular outer section (372) appended to an annular inner section (371) and mated to an annular outer end face (204) of the filler neck (14).

8. The apparatus of claim 7, wherein the annular outer section of the external low-permeation layer is bonded to the axially outer end of the internal low-permeation layer at the bond joint.

9. The apparatus of claim 7, wherein the base includes an exterior annular side surface coupled to the annular inner section of the external low-permeation layer to cause one leg of a first portion of the leak-path conduit to lie therebetween, the base further includes an exterior annular end surface (682) coupled to the annular outer section of the external low-permeation layer to cause a second leg of the first portion of the leak-path conduit to lie therebetween, and the second leg is arranged to lie in fluid communication with the fuel-conducting passageway.

10. The apparatus of claim 9, wherein the base includes a nozzle restrictor (40) formed to include a nozzle-receiving aperture (42) sized and adapted to receive a small-diameter unleaded fuel-dispensing pump nozzle and a restrictor anchor (64) coupled to the nozzle restrictor and configured to include the exterior annular side and end surfaces (681, 682), the restrictor anchor is also coupled to the internal low-permeation layer to cause a second portion of the leak-path conduit to lie therebetween, and the second portion is arranged to lie in fluid communication with the fuel-conducting passageway.

11. The apparatus of claim 4, wherein the side wall of the filler neck includes an inner sleeve (73) providing an interior surface (28) and an outer sleeve (71) surrounding the inner sleeve and providing an exterior surface and the interior surface of the inner sleeve is coupled to the internal low-permeation layer.

12. The apparatus of claim 11, wherein each of the inner and outer sleeves and the internal low-permeation layer terminate at axially outer ends (201, 202, 203) thereof and cooperate to define an annular outer end face (204) of the filler neck and the external low-permeation layer is mated to the annular outer end face of the filler neck.

13. The apparatus of claim 12, wherein the external low-permeation layer includes an annular inner section (371) positioned to he between portions of the base and the internal low-permeation layer and bonded to the filler neck internal low-permeation layer at the bond joint and an annular outer section (372) appended to the annular inner section and bonded to the axially outer end of the internal low-permeation layer al the bond joint.

14. The apparatus of claim 4, further comprising a second filler neck component (24) comprising a second base (33) arranged to he in the fuel-conducting passageway and an external component low-permeation layer (32) coupled to an exterior surface of the second base, and bonded to the internal low-permeation layer at a second bond joint (34) to retain the second filler neck component in a fixed position in the fuel-conducting passageway to establish a low-emission union of the external low-permeation layer of the second filler neck component and the internal low-permeation layer to provide means for blocking permeation of liquid fuel and fuel vapor extant in the fuel-conducting passageway to atmosphere surrounding the side wall through the component low-permeation layer of the second internal component and the filler neck low-permeation layer.

15. The apparatus of claim 14, wherein the second filler neck component further comprises a biasing spring (132) and a one-way valve member (31) that cooperate with the second base to define a fuel tank inlet check valve located in a lower end of the filler neck to lie in close proximity to a fuel tank associated with the filler neck, the one-way valve member is mounted for sliding movement in a fuel-conducting conduit formed in the second base and urged to a conduit-closing position by the biasing spring, and the spring is configured to yield to allow movement of the one-way valve member relative to the second base to assume a conduit-opening position allowing flow of incoming liquid fuel to pass from the fuel-conducting passageway defined by the internal low-permeation layer into and through the fuel-conducting conduit formed in the second base in response to a force applied to the one-way valve member by the incoming liquid fuel flowing toward the fuel tank associated with the filler neck.

16. The apparatus of claim 1, in which;
the filler neck component is formed to include a fuel-conductingpassageway (15),
the external low-permeation layer is coupled to and arranged to surround an annular exterior surface (72) of the filler neck component,
the internal low-permeation layer is arranged to surround the external low-permeation layer and the low-emission union of the low-permeation layers (25, 32, 37) is configured to provide means for blocking permeation of liquid fuel and fuel vapor extant in the fuel-conducting passageway (15) to atmosphere surrounding an annular side wall (23) coupled to and arranged to surround the internal low-permeation layer to form the filler neck containing the filler neck component.

17. The apparatus of claim 16, wherein the annular side wall (23) is made of a second material.

18. The apparatus of claim 16, wherein the filler neck component further comprises a biasing spring (132) and a one-way valve member (31) that cooperate with a base (33) to define a fuel tank inlet check valve (24) located in a lower end (15) of the filler neck to lie in close proximity to a fuel tank associated with the filler neck, the one-way valve member is mounted for sliding movement in a fuel-conducting conduit formed in the base and urged to a conduit-closing position by the biasing spring, and the spring is configured to yield to allow movement of the one-way valve member relative to the base to assume a conduit-opening position allowing flow of incoming liquid fuel to pass from the fuel-conducting passageway defined by the filler neck low-permeation layer into and through the fuel-conducting conduit formed in the base in response to a force applied to the one-way valve member by the incoming liquid fuel flowing toward the fuel tank associated with the filler neck.

19. The apparatus of claim 16, wherein the filler neck component further comprises a closure cap configured to mate with a base (41) to close an opening into the fuel-conducting passageway defined by the internal low-permeation layer.
wherein the closure cap includes an annular seal (104) arranged to mate with a portion of the external low-emission layer coupled to an exterior surface of the base and a cap body configured to carry the annular seat and engage the base to establish a sealed connection between the cap body, annular seal, and the external low-emission layer to block discharge of liquid fuel and fuel vapor from the fuel-conducting passageway through a space between the closure cap and the external low-emission layer, and wherein the base cooperates with the internal low-emission layer to define a leak-path conduit therebetween that originates and terminates in the fuel-conducting passageway so that any liquid fuel and fuel vapor that flows in the leak-path conduit is emptied into the fuel-conducting passageway and is unable to escape to the atmosphere surrounding the filler neck.

20. The apparatus of claim 19, wherein the base includes a nozzle restrictor formed to include a nozzle-receiving aperture (42) sized and adapted to receive a small-diameter unleaded fuel-dispensing pump nozzle and a restrictor anchor coupled to the nozzle restrictor to locate the nozzle-receiving aperture in the fuel-conducting passageway and wherein the component low-permeation layer is coupled lo an exterior surface of the restrictor anchor to cause a first portion (LP1) of the leak-path conduit to lie therebetween.

## Patentansprüche

1. Einfüllstutzen-Vorrichtung für einen Kraftstofftanks, umfassend:
einen Einfüllstutzen (14), der eine Innenschicht (25) mit geringer Durchlässigkeit aufweist, die einen kraftstoffleitenden Durchgang (15) definiert, **gekennzeichnet durch**
ein Einfüllstutzen-Bauteil (24, 26), das eine Außenschicht (32, 37) mit geringer Durchlässigkeit aufweist, die mit der eine geringe Durchlässigkeit aufweisenden Innenschicht (25) des Einfüllstutzens verklebt ist, um eine emissionsarme Verbindung (34, 39) dazwischen zu bilden, wobei jede der eine geringe Durchlässigkeit aufweisenden Innen- und Außenschichten (25, 32, 37) aus einem ersten Material hergestellt ist.

2. Vorrichtung nach Anspruch 1, wobei
der Einfüllstutzen ferner eine Seitenwand (23) hat und die eine geringe Durchlässigkeit aufweisende Schicht (25) des Einfüllstutzens mit einer Innenfläche (28) der Seitenwand (23) verbunden ist und konfiguriert ist, um eine Abgrenzung des kraftstoffleitenden Durchgangs (15) zu bilden, der sich durch den Einfüllstutzen (14) ersteckt, und
wobei das Einfüllstutzen-Bauteil eine Basis (33, 41) hat, die so angeordnet ist, dass sie in dem kraftstoffleitenden Durchgang (15) liegt, und die eine geringe Durchlässigkeit aufweisende Außenschicht (32, 37) mit einer Außenfläche (65) der Basis verbunden ist, wobei die eine geringe Durchlässigkeit aufweisende Innenschicht und die eine geringe Durchlässigkeit aufweisende Außenschicht an einer Verbindungsfuge (34, 39) verbunden sind, um das Einfüllstutzen-Bauteil (24, 26) in einer festen Position in dem kraftstoffleitenden Durchgang (15) zu halten, um Mittel bereitzustellen, die die Permeation von in dem kraftstoffleitenden Durchgang (15) noch vorhandenem flüssigen Kraftstoff und Kraftstoffdampf durch die Innen- und Außenschichten (25, 32, 37) mit niedriger Durchlässigkeit zu der die Seitenwände (23) umgegebenen Atmosphäre zu blockierten.

3. Vorrichtung nach Anspruch 2, wobei das Einfüllstutzen-Bauteil ferner eine Vorspannfeder (132) und ein Einwegventilelement (31) umfasst, die mit der Basis (33) zusammenwirken, um ein Kraftstufftanlc-Einlass-Rückschlagventil zu definieren, das sich in einem unteren Ende (16) des Einfüllstutzens (14) in unmittelbarer Nähe eines dem Einfüllstutzen (14) zugeordneten Kraftstofftanks (12) befindet, wobei das Einwagventüelement (31) gleitbeweglich in einer in der Basis (33) gebildeten Kraftstoffleitung (29) montiert ist und durch die Vorspannfeder (132) in eine die Leitung verschließende Position beaufschlagt wird und wobei die Feder (132) nachgiebig ausgebildet ist, um eine Bewegung des Einwegventilelements (31) relativ zur Basis (33) zu ermöglichen, um eine die Leitung öffnende Position einzunehmen, die den einströmenden flüssigen Kraftstoff von dem kraftstoffleitenden Durchgang (15), der durch die eine geringe Durchlässigkeit aufweisende Innenschicht (25) definiert wird, in und durch die in der Basis (33) gebildete Kraftstoffleitung passieren zu lassen, in Abhängigkeit von einer Kraft, die durch den einströmenden und in Richtung auf den dem Einfüllstutzen (14) zugeordneten Kraftstofftank strömenden flüssigen Kraftstoff auf das Einwegventilelement (31) ausgeübt wird.

4. Vorrichtung nach Anspruch 2, wobei das Einfüllstutzen-Bauteil ferner eine Verschlusskappe (20) aufweist, die passend zur Basis konfiguriert ist, um eine Öffnung in den durch die eine geringe Durchlässigkeit aufweisende Innenschicht definierten kraftstoffleitenden Durchgang zu verschließen, wobei die Verschlusskappe eine Ringdichtung (104) aufweist, die passend zu einem Bereich der mit der Außenfläche der Basis verbundenen, eine geringe Durchlässigkeit aufweisenden Außenschicht ausgebildet ist, und einen Kappenkörper (102, 103), der konfiguriert ist für das Tragen der Ringdichtung und für den Eingriff in die Basis, um eine dichte Verbindung zwischen dem Kappenkörper, der Ringdichtung und der eine geringe Durchlässigkeit aufweisenden Außenschicht herzustellen, um das Austreten von flüssigem Kraftstoff und Kraftstoffdampf durch einen Raum zwischen der Verschlusskappe und der eine geringe Durchlässigkeit aufweisenden Außenschicht aus dem kraftstoffleitenden Durchgang zu blockieren, und wobei die Basis mit der eine geringe Durchlässigkeit aufweisenden Innenschicht zusammenwirkt, um eine Leckage-Leitung (LP) dazwischen zu definieren, deren Ursprung und Mündung in dem kraftstoffleitenden Durchgang liegen, so dass in der Leckage-Leitung strömender flüssiger Kraftstoff und Kraftstoffdampf in den kraftstoffleitenden Durchgang entleert wird und nicht in die den Einfüllstutzen umgebende Atmosphäre entweichen kann.

5. Vorrichtung nach Anspruch 4, wobei die Basis einen Zapfpistolen-Reduziereinsatz (40) aufweist, der eine Zapfpistoten-Aufnahmeöffnung (42) hat, die derart bemessen und ausgebildet ist, dass sie die einen kleinen Durchmesser aufweisende Zapfpistole einer Verteilerpumpe für bleifreien Kraftstoff aufnimmt, und eine Reduziereinsatz-Verankerung (64), die mit dem Zapfpistolen-Reduziereinsatz verbunden ist, um die Zapfpistolen-Aufnahmeöffnung in dem kraftstoffleitenden Durchgang in Lage zu bringen, und wobei die Außenschicht mit geringer Durchlässigkeit mit einer Außenfläche der Reduziereinsatz-Verankerung verbunden ist, so dass ein erster Abschnitt der Leckage-Leitung (LP1) dazwischen liegt.

6. Vorrichtung nach Anspruch 5, wobei die Reduziereinsatz-Verankerung eine kappenmontierte Hülse (68) aufweist, mit einer Innenfläche, die für die Aufnahme und den Eingriff mit dem Kappenkörper der Verschlusskappe konfiguriert ist, und mit einer Außenfläche, die mit der eine geringe Durchlässigkeit aufweisenden Außenschicht verbunden ist, um einen ersten Abschnitt (LP1) der dazwischenliegenden Leckage-Leitung zu definieren, wobei die Reduziereinsatz-Verankerung ferner einen Reduziereinsatz-Haltering (66) aufweist, der zwischen dem Zapfpistolen-Reduziereinsatz und dem kappenmontierten Körper angeordnet und jeweils mit dem Zapfpistolen-Reduziereinsatz und dem kappenmontierten Körper verbunden ist, wobei der Reduziereinsatz-Haltering eine mit der eine geringe Durchlässigkeit aufweisenden Innenschicht verbundene erste Außenschicht aufweist, um einen zweiten Abschnitt (LP2) der dazwischenliegenden Leckage-Leitung zu definieren, und eine mit der eine geringe Durchlässigkeit aufweisenden Außenschicht verbundene zweite Außenfläche, um einen dritten Abschnitt (LP3) der dazwischenliegenden Leckage-Leitung zu definieren, wobei der zweite Abschnitt den ersten und den dritten Abschnitt in Fluidkommunikation verbindet und wobei der erste und der dritte Abschnitt jeweils derart angeordnet sind, dass sie sich in Fluidkommunikation mit dem kraftstoffteitenden Durchgang befinden, um zu bewirken, dass die Leckage-Leitung in dem kraftstoffleitenden Durchgang entspringt und mündet.

7. Vorrichtung nach Anspruch 4, wobei die Seitenwand des Einfüllstutzens und die eine geringe Durchlässigkeit aufweisende Innenschicht des Einfüllstutzen jeweils an deren axial äußeren Enden (201, 202, 203) enden und zusammenwirken, um eine ringförmige äußere Endfläche des Einfüllstutzens zu definieren, wobei die bauteilseitige Schicht mit geringer Durchlässigkeit einen ringförmigen inneren Abschnitt (371) aufweist, der zwischen Bereichen der Basis und der eine geringe Durchlässigkeit aufweisenden Innenschicht des Einfüllstutzens positioniert ist und an der Verbindungsfiuge (34) mit der eine geringe Durchlässigkeit aufweisenden Innenschicht verbunden ist, und wobei die eine geringe Durchlässigkeit aufweisende Außenschicht einen ringförmigen äußeren Abschnitt (372) aufweist, der an den einen ringförmigen inneren Abschnitt (371) angefügt ist und mit einer ringförmigen äußeren Endfläche (204) des Einfüllstutzens (14) ineinandergreift.

8. Vorrichtung nach Anspruch 7, wobei der ringförmige äußere Abschnitt der eine geringe Durchlässigkeit aufweisenden Außenschicht an der Verbindungsfuge mit einem axial äußeren Ende der eine geringe Durchlässigkeit aufweisenden Innenschicht verbunden ist.

9. Vorrichtung nach Anspruch 7, wobei die Basis eine äußere ringförmige Seitenfläche aufweist, die mit einem ringförmigen inneren Abschnitt der eine geringe Durchlässigkeit aufweisenden Schicht verbunden ist, so dass ein Schenkel eines ersten Abschnitts der Leckage-Leitung dazwischen liegt, wobei die Basis ferner eine äußere ringförmige Endfläche (682) aufweist, die mit einem ringförmigen äußeren Abschnitt der eine geringe Durchlässigkeit aufweisenden Außenschicht verbunden ist, so dass ein zweiter Schenken des ersten Abschnitts der Leckage-Leitung dazwischen liegt, und wobei der zweite Schenkel derart angeordnet ist, dass er sich in Fluid-Kommunikation mit dem kraftstofffleitenden Durchgang befindet.

10. Vorrichtung nach Anspruch 9, wobei die Basis einen Zapfpistolen-Reduziereinsatz (40) aufweist, der eine Zapfpistolen-Aufnahmeöffnung (42) hat, die derart bemessen und ausgebildet ist, dass sie die einen kleinen Durchmesser aufweisende Zapfpistole einer Verteilerpumpe für bleifreien Kraftstoff aufnimmt, und eine Reduziereinsatz-Verankerung (64), die mit dem Zapfpistolen-Reduziereinsatz verbunden ist und derart konfiguriert ist, dass sie die äußere ringförmige Seite und Endflächen (681, 682) aufweist, wobei der Zapfipistofen-Reduziereinsatz auch mit der eine geringe Durchlässigkeit aufweisenden Innenschicht verbunden ist, so dass ein zweiter Abschnitt der Leckage-Leitung dazwischen liegt und ein zweiter Abschnitt derart angeordnet ist, dass er sich in Fluidkommunikation mit dem kraftstoffleitenden Durchgang befindet.

11. Vorrichtung nach Anspruch 4, wobei die Seitenwand des Einfüllstutzens eine Innenhülse (73) aufweist, die eine Innenfläche (28) bereitstellt, und eine Außenhülse (77), die die Innenhülse umschließt und eine Außenfläche bereitstellt, und wobei die Innenfläche der Innenhülse mit der eine geringe Durchlässigkeit aufweisenden Innenschicht verbunden ist.

12. Vorrichtung nach Anspruch 11, wobei die Innenhülse und die Außenhülse und die eine geringe Durchlässigkeit aufweisende Innenschicht jeweils an ihren axial äußeren Enden (201, 202, 203) abschließen und zusammenwirken, um eine ringförmige äußere Endfläche (204) des Einfüllstutzens zu definieren, und wobei die eine geringe Durchlässigkeit aufweisende Außenschicht mit der ringförmigen äußeren Endfläche des Einfüllstutzens ineinandergreift.

13. Vorrichtung nach Anspruch 12, wobei die eine geringe Durchlässigkeit aufweisende Außenschicht einen ringförmigen inneren Abschnitt (371) aufweist, der derart positioniert ist, dass er zwischen Abschnitten der Basis und der eine geringe Durchlässigkeit aufweisenden Innenschicht liegt, und der an der Verbindungsfuge mit der eine geringe Durchlässigkeit aufweisenden Schicht des Einfüllstutzens verbunden ist, und einen ringförmigen äußeren Abschnitt (372), der an den ringförmigen inneren Abschnitt angefügt ist und an der Verbindungsfuge mit dem axial äußeren Ende der eine geringe durchlässigkeit aufweisenden Innenschicht verbunden ist.

14. Vorrichtung nach Anspruch 4, ferner umfassend ein zweites Einfüllstutzen-Bauteil (24), umfassend eine zweite Basis (33), die derart angeordnet ist, dass sie in dem kraftstoffleitenden Durchgang liegt, und eine bauteilseitige Schicht (32) mit geringer Durchlässigkeit, die mit einer Außenfläche der zweiten Basis mit an einer zweiten Verbindungsfuge (34) mit der eine geringe Durchlässigkeit aufweisenden Innenschicht verbunden ist, um das zweite Einfüllstutzen-Bauteil in einer festen Position in dem kraftstoffleitenden Durchgang zu halten und um eine emissionsarme Verbindung der eine geringe Durchlässigkeit aufweisenden Außenschicht des zweiten Einfüllstutzen-Bauteils und der eine geringe Durchlässigkeit aufweisenden Innenschicht zu bilden und dadurch Mittel bereitzustellen, die eine Permeation von in dem kraftstoffleitenden Durchgang vorhandenem flüssigen Kraftstoff und Kraftstoffdampf durch die eine geringe Durchlässigkeit aufweisende bauteilseitige Schicht des zweiten inneren Bauteils und durch die eine geringe Durchlässigkeit aufweisende Schicht des Einfüllstutzens zu der die Seitenwand umgebenden Atmosphäre zu blockierten.

15. Vorrichtung nach Anspruch 14, wobei das zweite Einfüllstutzen-Bauteil ferner eine Vorspannfeder (132) und ein Einwegventilelement (31) aufweist, die mit der zweiten Basis zusammenwirken, um ein Einlass-Rückschlagventil des Kraftstofftanks zu bilden, das sich einem unteren Ende des Einfüllstutzens in unmittelbarer Nähe eines dem Einfüllstutzen zugeordneten Kraftstofftanks befindet, wobei das Einwegventilelement gleitbeweglich in einer in der zweiten Basis gebildeten Kraftstoffleitung montiert ist und durch die Vorspannfeder in eine die Leitung verschließende Position beaufschlagt ist, und wobei die Feder nachgiebig ausgebildet ist, um eine Bewegung des Einwegventilelements relativ zu der zweiten Basis und das Einnehmen einer die Leitung öffnenden Position zu ermöglichten, damit einströmender flüssiger Kraftstoff von dem kraftstoffleitenden Durchgang, der durch die eine geringe Durchlässigkeit aufweisende Innenschicht definiert wird, in die und durch die in der zweiten Basis gebildete Kraftstoffleitung strömen kann, in Abhängigkeit von einer Kraft, die durch einströmenden und in Richtung auf den dem Einfüllstutzen zugeordneten Kraftstofftank strömenden flüssigen Kraftstoff auf das Einwegventilelement ausgeübt wird.

16. Vorrichtung nach Anspruch 1, wobei
das Einfüllstutzen-Bauteil derart ausgebildet ist, dass einen kraftstoffleitenden Durchgang (15) aufweist,
die eine geringe Durchlässigkeit aufweisende Außenschicht mit einer ringförmigen Außenfläche (72) des Einfüllstutzen-Bauteils verbunden ist und diese umschließt,
die eine geringe Durchlässigkeit aufweisende Außenschicht derart angeordnet ist, dass sie die eine geringe Durchlässigkeit aufweisende Außenschicht umschließt, und die emissionsarme Verbindung der eine geringe Durchlässigkeit aufweisenden Schichten (25, 32, 37) konfiguriert ist für die Bereitstellung von Mitteln, die eine Permeation von in dem kraftstoffleitenden Durchgang (15) vorhandenem flüssigen Kraftstoff und Kraftstoffdampf in die Atmosphäre verhindern, die eine ringförmige Seitenwand (23) umgibt, die mit der eine geringe Durchlässigkeit aufweisenden Innschicht verbunden ist und diese umschließt, um den Einfüllstutzen zu bilden, der das Einfüllstutzen-Bauteil enthält.

17. Vorrichtung nach Anspruch 16, wobei die ringförmige Seitenwand (23) aus einem zweiten Material hergestellt ist.

18. Vorrichtung nach Anspruch 16, wobei das Einfüllstutzen-Bauteil ferner eine Vorspannfeder (132) und ein Einwegventilelement (31) aufweist, die mit einer Basis (33) zusammenwirken, um ein Einlass-Rückschlagventil (24) des Kraftstofftanks zu bilden, das sich einem unteren Ende (16) des Einfüllstutzens in unmittelbarer Nähe eines dem Einfüllstutzen zugeordneten Kraftstofftanks befindet, wobei das Einwegventilelement gleitbeweglich in einer in der zweiten Basis gebildeten Kraftstoffteitung montiert ist und durch die Vorspannfeder in eine die Leitung verschließende Position beaufschlagt ist, und wobei die Feder nachgiebig ausgebildet ist, um eine Bewegung des Einwegventilelements relativ zu der zweiten Basis und das Einnehmen einer die Leitung öffnenden Position zu ermöglichen, damit einströmender flüssiger Kraftstoff von dem kraftstoffleitenden Durchgang, der durch die eine geringe Durchlässigkeit aufweisende Innenschicht definiert wird, in die und durch die in der Basis gebildete Kraftstoffleitung strömen kann, in Abhängigkeit von einer Kraft, die durch einströmenden und in Richtung auf den dem Einfüllstutzen zugeordneten Kraftstofftank strömenden flüssigen Kraftstoff auf das Einwegventilelement ausgeübt wird.

19. Vorrichtung nach Anspruch 16, wobei das Einfüllstutzen-Bauteil ferner eine Verschlusskappe aufweist, die passend zu einer Basis (41) konfiguriert ist, um eine in den durch die Innenschicht mit geringer Durchlässigkeit definierten kratftstoffleitenden Durchgang führende Öffnung zu verschließen, wobei die Verschlusskappe (104) derart ausgebildet ist, dass sie mit einem Abschnitt der emissionsarmen Außenschicht ineinandergreift, die mit einer Außenfläche der Basis verbunden ist, und einen Kappenkörper, der derart konfiguriert ist, dass er den ringförmigen Sitz trägt und in die Basis eingreift, um eine dichte Verbindung zwischen dem Kappenkörper, der Ringdichtung und der emissionsarmen Außenschicht herzustellen, so dass ein Austreten von flüssigem Kraftstoff und Kraftstoffdampf durch einen Raum zwischen der Verschlusskappe und der emissionsarme Außenschicht aus dem kraftstoffleitenden Durchgang verhindert wird, und wobei die Basis mit der emissionsarme Innenschicht zusammenwirkt, um dazwischen eine Leckage-Leitung zu definieren, deren Ursprung und Mündung in dem kraftstoffleitenden Durchgang liegt, so dass in der Leckage-Leitung strömender flüssiger Kraftstoff und Kraftstoffdampf in den kraftstoffleitenden Durchgang entleert wird und nicht in die den Einfüllstutzen umgebende Atmosphäre entweichen kann.

20. Vorrichtung nach Anspruch 19, wobei die Basis einen Zapfpistolen-Reduziereinsatz aufweist, der eine Zapfpistolen-Aufnahmeöffnung (42) hat, die derart bemessen und ausgebildet ist, dass sie die einen kleinen Durchmesser aufweisende Zapfpistole einer Verteilerpumpe für bleifreien Kraftstoff aufnimmt, und eine Reduziereinsatz-Verankerung, die mit dem Zapfpistolen-Reduziereinsatz verbunden ist, um die Zapfpistolen-Aufnahmeöffnung in dem kraftstoffleitenden Durchgang in Lage zu bringen, und wobei die bauteilseitige Außenschicht mit geringer Durchlässigkeit mit einer Außenfläche der Reduziereinsatz-Verankerung verbunden ist, so dass ein erster Abschnitt der Leckage-Leitung (LP1) dazwischen liegt.

## Revendications

1. Dispositif de conduite de remplissage de réservoir de carburant comportant :
- une conduite de remplissage (14) ayant une couche interne (25) à faible perméation constituant un passage de carburant (15),
**caractérisée par**
- un composant de conduite de remplissage (24, 26) ayant une couche externe (32, 37) à faible perméation fixée à la couche interne (25) à faible perméation de la conduite de remplissage pour constituer une réunion à faible émission (34, 39),
- la conduite interne et la conduite externe de faible de perméation (25, 32, 37) étant réalisée en un premier matériau

2. Dispositif selon la revendication 1,
**caractérisé en ce que**
- la conduite de remplissage comporte en outre une paroi latérale (23) et la première couche de conduite à faible perméation (25) est associée à la surface intérieure (28) de la paroi latérale (23) et elle est configurée pour former la frontière du passage de carburant (15) traversant la conduite de remplissage (14), et
- le composant de conduite de remplissage, comporte une base (33, 41) venant dans le passage de carburant (15) et la couche externe à faible perméation (32, 37) est couplée à la surface extérieure (65) de la base,
- la couche interne à faible perméation et la couche externe à faible perméation étant reliées à un joint de liaison (34, 39) pour retenir le composant de conduite (24, 26) dans une position fixe dans le passage de carburant (15) et constituent un moyen pour bloquer la perméation du carburant liquide, la vapeur de carburant s'échappant par le passage de carburant (15) à l'atmosphère entourant la paroi latérale (23) en traversant la couche interne et la couche externe à faible perméation (25, 32, 37).

3. Dispositif selon la revendication 2,
dans lequel
le composant de conduite de remplissage, comporte en outre un ressort de poussée (132) et un élément de vanne unidirectionnel (31) coopérant avec la base (33) pour constituer une vanne de contrôle d'entrée dans le réservoir à carburant à l'extrémité inférieure (16) de la conduite de remplissage (14), à proximité du réservoir à carburant (12) équipé de la conduite de remplissage (14), l'élément de vanne unidirectionnel (31) coulissant dans la conduite de carburant (29) formée dans la base (33) en étant poussé dans sa position de fermeture de la conduite par le ressort de poussée (132), ce ressort (132) permettant le mouvement de l'élément de vanne unidirectionnel (31) par rapport à la base (33) pour ouvrir la conduite et permettre le passage du carburant liquide entrant, pour arriver du passage de carburant (15) défini par la couche interne à faible perméation (25) dans et à travers la conduite de carburant (29) réalisée dans la base (33), en fonction de la force appliquée à l'élément de vanne unidirectionnel (31) par le carburant liquide entrant, coulant en direction du réservoir à carburant (12) équipé de la conduite de remplissage (14).

4. Dispositif selon la revendication 2,
dans lequel
- le composant de conduite de remplissage comporte en outre un capuchon d'obturation (20) adapté à la base pour fermer l'ouverture du passage de carburant, défini par la couche interne à faible perméation,
- le capuchon ayant un joint annulaire (104) s'adaptant à une partie de la couche externe à faible perméation couplée à la surface externe de la base, et
- le corps (102, 103) du capuchon est configuré pour porter le joint annulaire et rencontrer la base pour réaliser une liaison étanche entre le corps de capuchon, le joint annulaire et la couche externe à faible perméation, pour bloquer la sortie de carburant liquide et de vapeur de carburant par le passage de carburant à travers l'intervalle entre le capuchon d'obturation et la couche externe à faible perméation, et
- la base coopère avec la couche interne à faible perméation pour définir entre elles un chemin de fuite (LP), qui prend naissance et se termine dans le passage de carburant de façon que tout le carburant liquide et tout le carburant vapeur qui passe dans le chemin de fuite, s'évacue dans le passage de carburant et ne risque pas de s'échapper à l'atmosphère autour de la conduite de remplissage.

5. Dispositif selon la revendication 4,
dans lequel
- la base comporte un élément en forme de buse (40) avec un orifice de réception de buse (42) dimensionné et adapté pour recevoir une buse de pompe de carburant, non dirigée, de faible diamètre et un organe d'accrochage limiteur (64) couplé à l'élément limiteur de buse pour positionner l'orifice de réception de buse dans le passage de carburant, et
- la couche externe à faible perméation est couplée à la surface extérieure de l'élément limiteur pour qu'une première partie du chemin de fuite (LP1) se situe entre eux.

6. Dispositif selon la revendication 5,
dans lequel
- l'organe d'accrochage limiteur comporte un manchon de montage (68) de capuchon dont la surface intérieure est configurée pour recevoir et s'adapter au corps du capuchon d'obturation et une surface extérieure couplée à la couche externe à faible perméation pour définir entre eux la première partie (LP1) du chemin de fuite, l'organe d'accrochage de limiteur comportant en outre une bague de support de limiteur (66) interposée et couplée à la fois au limiteur à buse et au corps de montage de capuchon, la bague de support de limiteur ayant une première surface extérieure couplée à la couche interne à faible perméation pour définir entre eux la seconde partie (LP2) de la conduite de chemin de fuite et une seconde surface extérieure couplée à la couche externe à faible perméation pour définir entre eux la troisième partie (LP3) du chemin de fuite, la seconde partie reliant la première et la troisième partie de façon à permettre le passage du liquide, et chacune des première et troisième parties transmettant le liquide par le passage de carburant, pour que le chemin de fuite commence et se termine dans le passage de carburant.

7. Dispositif selon la revendication 4,
**caractérisé en ce qu'**
- à la fois la paroi latérale de la conduite de remplissage et la couche interne à faible perméation de la conduite de remplissage se terminent toutes deux aux extrémités extérieures axiales (201, 202, 203) et coopèrent pour former la surface annulaire d'extrémité extérieure, de la conduite de remplissage,
- la couche à faible perméation ayant un segment interne annulaire (371) situé entre les parties de la couche interne à faible perméation de la conduite en étant relié à cette couche interne au niveau du joint de liaison (34) et la couche externe à faible perméation comporte en outre un segment annulaire extérieur (372) relié au segment annulaire interne (371) rejoignant la surface annulaire d'extrémité extérieure (204) de la conduite de remplissage (14).

8. Dispositif selon la revendication 7,
dans lequel
le segment annulaire extérieur de la couche externe à faible perméation est fixé à l'extrémité axiale extérieure de la couche interne à faible perméation au niveau du joint bloqué.

9. Dispositif selon la revendication 7,
dans lequel
la base comporte une surface latérale annulaire extérieure couplée au segment annulaire intérieur de la couche externe à faible perméation pour avoir une première branche d'une première partie du chemin de fuite se situant entre eux, la base ayant en outre une surface d'extrémité annulaire extérieure (682) couplée au segment annulaire extérieur de la couche externe à faible perméation pour qu'une seconde branche de la première partie de la conduite formant le chemin de fuite se situe entre eux et cette seconde branche est disposée de façon à réaliser la communication de fluide avec le passage de carburant.

10. Dispositif selon la revendication 9,
dans lequel
la base comporte un limiteur de buse (40) muni d'un orifice (42) de réception de buse dimensionné et adapté pour recevoir une buse de pompe de distribution de carburant, de faible diamètre, non dirigée et un organe d'accrochage limiteur (64) couplé au limiteur de buse et configuré pour recevoir le côté annulaire extérieur et les surfaces d'extrémité (681, 682), l'organe d'accrochage limiteur étant également couplé à la couche interne à faible perméation pour qu'une partie du chemin de fuite se situe entre eux et la seconde partie est en communication de fluide avec le passage traversé par le carburant.

11. Dispositif selon la revendication 4,
dans lequel
la paroi latérale de la conduite de remplissage comporte un manchon intérieur (73) muni d'une surface intérieure (28) et d'un manchon extérieur (71) entourant le manchon intérieur et créant une surface extérieure, la surface intérieure du manchon intérieur étant couplée à la couche interne à faible perméation.

12. Dispositif selon la revendication 11,
dans lequel
le manchon intérieur et le manchon extérieur ainsi que la couche interne à faible perméation, se terminent au niveau des extrémités axiales extérieures (201, 202, 203), et coopèrent de manière à former la surface d'extrémité annulaire extérieure (204) de la conduite de remplissage, la couche externe à faible perméation étant ajustée sur la surface d'extrémité annulaire extérieure de la conduite de remplissage.

13. Dispositif selon la revendication 12,
dans lequel
la couche externe à faible perméation comporte un segment intérieur annulaire (371) positionné de façon se trouver entre les parties de la base et de la couche interne à faible perméation et lié à la couche interne à faible perméation de la conduite de remplissage à la jonction, et un segment annulaire extérieur (372) est fixé au segment annulaire intérieur et est lié à l'extrémité axiale extérieure de la couche interne à faible perméation, au niveau du joint de liaison.

14. Dispositif selon la revendication 4,
comportant en outre,
un second composant (24) de conduite de remplissage ayant une seconde base (33) destinée à se trouver dans le passage traversé par le carburant et une couche externe (32) à faible perméation couplée à la surface externe de la seconde base et liée à la couche interne à faible perméation au niveau du second joint (34) pour retenir le second composant de la conduite de remplissage dans une position fixe dans le passage traversé par le carburant pour créer une liaison à faible émission avec la couche externe à faible perméation du second composant de conduite de remplissage et la couche interne à faible perméation pour avoir des moyens permettant de bloquer la perméation du carburant liquide et de la vapeur de carburant sortant par le passage traversé par le carburant pour arriver à l'atmosphère autour de la paroi latérale à travers la couche à faible perméation du second composant interne et la couche à faible perméation de la conduite de remplissage.

15. Dispositif selon la revendication 14,
dans lequel
le second composant de conduite de remplissage, comporte en outre un ressort de poussée (132) et un organe de vanne unidirectionnel (31) pour coopérer avec la seconde base et former une vanne de contrôle d'entrée dans un réservoir de carburant à l'extrémité basse de la conduite de remplissage pour se trouver au voisinage immédiat du réservoir de carburant associé au col de remplissage, l'élément de vanne unidirectionnel étant monté pour se déplacer en coulissement dans une conduite de carburant formée dans la seconde base et poussée vers une position de fermeture de conduite par un ressort précontraint, et le ressort est configuré pour permettre les mouvements de l'organe de vanne unidirectionnel par rapport à la seconde base et prendre une position d'ouverture de conduit permettant le passage de carburant liquide d'entrée jusque dans le passage traversé par le carburant défini par la couche interne à faible perméation et à travers la conduite de carburant formée dans la seconde base en réponse à une force appliquée à l'organe de vanne unidirectionnel par le carburant liquide entrant, s'écoulant vers le réservoir associé à la conduite de remplissage.

16. Dispositif selon la revendication 1,
dans lequel
- le composant de conduite de remplissage comporte un passage (15) traversé par le carburant,
- la couche externe basse pression est couplée et est montée de manière à entourer une surface annulaire extérieure (72) du composant de conduite de remplissage,
- la couche interne à faible perméation est disposée de manière à entourer la couche externe à faible perméation et la réunion à faible émission des couches à faible perméation (25, 32, 37) est configurée pour constituer un moyen permettant de bloquer la perméation du carburant liquide et du carburant à l'état de vapeur dans le passage de carburant (15) vers l'atmosphère entourant la paroi latérale annulaire (23) couplée et installée de manière à entourer la couche interne à faible perméation pour former la conduite de remplissage munie du composant de conduite de remplissage.

17. Dispositif selon la revendication 16,
dans lequel
la paroi annulaire latérale (23) est réalisée dans un second matériau.

18. Dispositif selon la revendication 16,
dans lequel
le composant de conduite de remplissage comporte en outre un ressort de poussée (132) et un élément de vanne unidirectionnel (31) coopérant avec une base (33) pour constituer une vanne de contrôle d'entrée de carburant (24) en contrebas de l'extrémité inférieure (16) de la conduite de remplissage de façon à se trouver au voisinage immédiat du réservoir de carburant associé à la conduite de remplissage, l'organe de vanne unidirectionnel étant monté de façon à exécuter un mouvement de glissement dans la conduite de remplissage de carburant formée dans la base et être poussé dans une position de fermeture de conduite par un ressort de poussée, le ressort étant configuré pour permettre le mouvement de l'organe de vanne unidirectionnel par rapport à la base tout en assurant une position d'ouverture de conduite permettant le passage du carburant liquide d'entrée pour couler du passage de carburant défini par la couche à faible perméation de la conduite de remplissage jusque dans la conduite de remplissage formée à la base en réponse à la force appliquée à l'élément de vanne unidirectionnel par le liquide entrant coulant vers le réservoir de carburant associé à la conduite de remplissage.

19. Dispositif selon la revendication 16,
dans lequel
- le composant de conduite de remplissage comporte en outre un capuchon d'obturation configuré pour s'adapter à une base (41) et fermer l'ouverture du passage traversé par le carburant, défini par la couche interne à faible perméation,
- le capuchon d'obturation comportant un joint annulaire (104) installé de façon à coopérer avec une partie de la couche externe à faible émission, couplée à la surface externe de la base et le corps du capuchon est configuré pour porter le siège annulaire et coopérer avec la base pour réaliser une liaison étanche entre le corps de capuchon, le joint annulaire et la couche externe à faible émission, de manière à bloquer la décharge de carburant liquide et de vapeur de carburant du passage traversé par le carburant dans l'espace compris entre le capuchon d'obturation et la couche externe à faible perméation, et
- la base coopère avec la couche interne à faible perméation pour définir une conduite de chemin de fuite entre eux, qui commence et se termine dans le passage traversé par le carburant de façon que tout le carburant liquide et toute la vapeur de carburant qui traversent la conduite formant le chemin de fuite, soient vidés dans le passage traversé par le carburant et ne risquent pas de s'échapper à l'atmosphère entourant la conduite de remplissage.

20. Dispositif selon la revendication 19,
dans lequel
- la base comporte un limiteur de buse formé de manière à comporter un orifice de réception de buse (42) dimensionné et adapté pour recevoir un bec de pompe de distribution de carburant, de faible diamètre et un organe d'accrochage limiteur couplé au limiteur de buse de manière à localiser l'orifice de réception de buse dans le passage traversé par le carburant, et
- le composant de la couche à faible perméation est couplé à la surface extérieure de l'organe d'accrochage limiteur pour qu'une première partie (LP1) de la conduite formant le chemin de fuite, se situe entre eux.
